(19) Europäisches Patentamt
European Patent Office
Office européen des brevets

(11) **EP 2 705 472 B1**

(12) **EUROPEAN PATENT SPECIFICATION**

(45) Date of publication and mention of the grant of the patent:
**03.04.2019 Bulletin 2019/14**

(21) Application number: **12724721.1**

(22) Date of filing: **03.05.2012**

(51) Int Cl.:
*G02B 6/126* (2006.01)    *B82Y 10/00* (2011.01)
*G06N 99/00* (2019.01)    *G02B 6/27* (2006.01)
*G02B 6/12* (2006.01)

(86) International application number:
**PCT/IB2012/052220**

(87) International publication number:
**WO 2012/150568 (08.11.2012 Gazette 2012/45)**

(54) **AN INTEGRATED OPTICS LOGIC GATE FOR POLARIZATION-ENCODED QUANTUM QUBITS AND A METHOD FOR THE PRODUCTION AND USE THEREOF**

INTEGRIERTE OPTIK MIT LOGIK-GATE FÜR POLARISATIONSCODIERTE QUANTEN-QUBITS SOWIE VERFAHREN ZU IHRER HERSTELLUNG UND VERWENDUNG

PORTE LOGIQUE À OPTIQUE INTÉGRÉE POUR QUBITS QUANTIQUES CODÉS PAR POLARISATION ET PROCÉDÉ POUR LA PRODUCTION ET L'UTILISATION DE CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.05.2011 IT PD20110140**

(43) Date of publication of application:
**12.03.2014 Bulletin 2014/11**

(73) Proprietors:
• **CNR - Consiglio Nazionale Delle Ricerche**
**00185 Roma (IT)**
• **Universita'Degli Studi di Roma "La Sapienza"**
**00185 Roma (IT)**

(72) Inventors:
• **CRESPI, Andrea**
**I-21052 Busto Arsizio (VA) (IT)**
• **MATALONI, Paolo**
**I-00182 Roma (IT)**
• **RAMPONI, Roberta**
**I-20139 Milano (IT)**
• **SANSONI, Linda**
**I-00030 San Cesareo (Roma) (IT)**
• **SCIARRINO, Fabio**
**I-80122 Napoli (IT)**
• **VALLONE, Giuseppe**
**I-00155 Roma (IT)**
• **OSELLAME, Roberto**
**I-20136 Milano (IT)**

(74) Representative: **Porta, Checcacci & Associati S.p.A**
**Via Vittoria Colonna, 4**
**20149 Milano (IT)**

(56) References cited:
• **SANSONI L ET AL: "Polarization Entangled State Measurement On A Chip", PHYSICAL REVIEW LETTERS AMERICAN PHYSICAL SOCIETY USA, vol. 105, no. 20, 12 November 2010 (2010-11-12), pages 200503-1-200503-4, XP002665397, ISSN: 0031-9007 cited in the application**
• **POLITI A ET AL: "Silica-on-silicon waveguide quantum circuits", SCIENCE AMERICAN ASSOCIATION FOR THE ADVANCEMENT OF SCIENCE USA, vol. 320, no. 5876, 2 May 2008 (2008-05-02), pages 646-649, XP002665398, ISSN: 0036-8075 cited in the application**
• **THOMPSON M G ET AL: "Integrated waveguide circuits for optical quantum computing", IET CIRCUITS, DEVICES & SYSTEMS IET UK, vol. 5, no. 2, March 2011 (2011-03), pages 94-102, XP002665399, ISSN: 1751-858X**
• **Hofmann: "Analysis of an experimental quantum logic gate by complementary classical operations", , 31 October 2006 (2006-10-31), pages 1-14, XP002665400, Retrieved from the Internet: URL:http://arxiv.org/PS_cache/quant-ph/pdf /0608/0608005v2.pdf [retrieved on 2011-12-08]**

- **ANDREA CRESPI ET AL: "Integrated photonic quantum gates for polarization qubits", ARXIV.ORG, CORNELL UNIVERSITY LIBRARY, 201 OLIN LIBRARY CORNELL UNIVERSITY ITHACA, NY 14853, 7 May 2011 (2011-05-07), XP080506005, DOI: 10.1038/NCOMMS1570**

**Description**

<u>Prior art</u>

The use of the laws of quantum mechanics for storing, manipulating and transmitting data is very likely to lead, in the near future, to a major advance in the resolution of a number of complex problems in computing which cannot be tackled with existing technology. The production of a quantum computer is an objective viewed with increasing interest in the scientific community. Quantum cryptographic methods are also used in devices available on the market, such as the product known as MagiQ QPN Security Gateway (QPN - 8505) and those produced by ID Quantique.

Photons are the natural candidates for carrying bits of data, because they are practically immune to decoherence and can be transmitted over long distances in free space or in fibre optics.

In the following text, the term "quantum unit of information", or "qubit" (quantum bit) will be used to denote a unit vector in a Hilbert space which can be represented thus:

$$|\psi\rangle = a|0\rangle + b|1\rangle$$

Equation (1)

where a and b are two complex numbers such that $|a|^2 + |b|^2 = 1$.

This representation is used to maintain the analogy with the conventional bit in which the expected states are 0 or 1. For a quantum qubit, the fundamental property is that of comprising states superimposed on the base states $|0\rangle$ and $|1\rangle$.

A widely used experimental procedure for producing quantum information protocols is based on single photon states. In particular, a qubit is physically implemented by means of the state of a single photon, and the encoding can use either the polarization or the moment (path) as the base states $|0\rangle$ and $|1\rangle$ defined above in equation (1).

The development of the possibility of manipulating the quantum information, in other words the qubits as defined above, represents a major technological challenge, since it requires the capacity to control in a highly precise way the propagation and interference of photons by means of which the information is encoded. The complexity of optical systems increases with the number of qubits used, to the point that their use with a large number of qubits becomes prohibitive.

Many studies have been conducted in the last few years with the aim of producing photon logic gates for "manipulating" qubits. In the field of polarization encoding, which is by far the most widely used technique, studies have been exclusively concerned with structures produced "in bulk", in other words with macroscopic optical devices. Examples of these devices have been developed in the following papers, for example.

In "Demonstration of a simple entangling optical gate and its use in Bell-state analysis" by N.K. Langford and others, Physical Review Letter no. 95, p. 210504 et seq. (2005), a description is given of a new optical gate architecture for manipulating two-qubit entanglement, which is significantly simpler than the preceding implementations, using partially polarizing beam splitters, and requires only a single optical "mode-matching" condition. In particular, the operation of a C-Z (controlled-Z) gate is demonstrated.

*"Demonstration of an optical quantum Controlled-NOT gate without path interference"* by R. Okamoto and others, Physical Review Letter no. 95, p. 210506 et seq. (2005), reports a first experiment in the implementation of a quantum C-NOT gate without any path interference, including three partially polarizing beam splitters with suitable transmittance and reflectivity.

However, working with bulk devices has a number of drawbacks. This is because, in order to operate successfully with systems having multiple qubits, it is necessary to be able to act on each individual qubit and implement interactions of two qubits with high precision.

This requirement is unattainable with the experimental approaches used up to the present time. This is because the development of increasingly complex quantum optical systems implemented in bulk optics suffers from serious limitations in terms of the stability, the operating accuracy and the physical dimensions of the equipment.

Quantum optical systems implemented in bulk optics have very large physical dimensions, making it necessary to stabilize all their optical components, in other words to fix them firmly together (they have been produced on optical tables which isolate the system from external vibrations), and it is also necessary to provide temperature stability, requiring a temperature controlled environment in which to construct the system. These requirements make it difficult to achieve high precision of measurement and impossible to produce (or transport) quantum optical components outside the laboratory in an industrial setting.

The emerging strategy for overcoming these limitations is that of exploiting the robustness and compactness which can be obtained with integrated waveguide technology, in other words using miniature devices in optical waveguides in the quantum regime. It has recently been demonstrated, in A. Politi et al., Science 320, 646 (2008), and in A. Politi, J. C. F. Matthews, and J. L. O'Brien, Science 325, 1221 (2009), that integrated circuits in $SiO_2$ waveguides on silicon chips can be used successfully to produce some basic photonic components. Intrinsically stable interferometers have been produced, not only on a single qubit encoded in the optical path of a photon, but also in the path of two entangled photons. Miniaturized integrated quantum circuits have also been produced in order to implement the first integrated Controlled-NOT (CNOT) logic gate, achieving a fidelity very close to the theoretical value. More recently, components with variable characteristics have been produced for quantum circuits; see, for example, J. Matthews et al., Nat. Photon. 3, 346 (2009). In particular, Mach-Zehnder interferometers implemented in waveguides, operating with micro-heaters integrated into optical chips, have been demonstrated. The micro-heaters are electrical resistances formed from thin metal strips shaped so as to follow the profiles of the underlying optical devices, and are therefore essentially decoupled optically from the underlying waveguides but are in appropriate thermal contact. The locally delivered heat modifies the refractive index of the material, by the thermo-optic effect, and allows precise and stable phase control of states with one, two and four photons, while also permitting the correction of integrated devices which fail to meet specifications because of fluctuations in manufacture. Similar results have been obtained with UV laser written optical circuits fabricated on silicon substrates.

It should be noted, however, that all the experiments conducted up to the present time with quantum integrated circuits are based purely on qubits encoded in the optical paths of photons. No systematic study has yet been made of the optical properties of waveguides in relation to the propagation and manipulation of polarization-encoded qubits with these structures. On the other hand, many quantum information protocols and many sources of entangled photons are based on the degree of freedom of polarization, as can be seen in many examples in the literature. It is therefore a matter of fundamental importance to provide for the transmission and manipulation of any polarization state in integrated quantum circuits.

The article "Polarization entangled state measurement on a chip" by Linda Sansoni and others, published in Physical Review Letters 105, 200503 (2010), describes the implementation of a directional coupler in integrated optics, fabricated by femtosecond laser writing, which acts as a balanced beam splitter capable of supporting polarization-encoded qubits. This device was used to demonstrate interference with polarization-entangled states and the projection of singlet and triplet states. This beam splitter operates independently of the polarization and is of the type known as balanced, in which each input branch is transmitted to the two output gates with the same probability. Using the aforesaid beam splitter, it is possible to discriminate between the polarization-entangled triplet and singlet states.

In particular, when two photons in the singlet state are introduced simultaneously into the beam splitter, they emerge from the device essentially in the two possible output modes; on the other hand, two photons in the triplet state emerge jointly in one of the two possible outputs owing to the quantum interference.

The capacity of the beam splitter to operate on an arbitrary input polarization state is demonstrated by the degree of polarization G at the output of the device, which is constantly greater than 99.8% and is ultimately due to the reduced birefringence of the guides fabricated by the femtosecond laser writing method. G is defined as the percentage of the beam which is completely polarized.

"Design and implementation of polarization filter for quantum states discriminator in optical quantum communication" by S. Salemian et al., Optik (2010), an article not yet printed, describes a polarization filter for discriminating a quantum communication. If the photon has a vertical polarization, it will appear at output 1; if not, it appears at output 2. This filter is placed outside a CNOT logic gate; in particular, it is located at the receiver and receives a single qubit as its input.

Summary of the invention

The present invention relates to a use of at least one partially polarizing beam splitter as a quantum logic gate for at least two polarization-encoded qubits and a system for the entanglement or for the disentanglement of two polarization-encoded qubits according to the appended claims.

A quantum logic gate is analogous to a conventional classical logic gate, but it operates on qubits instead of bits. Unlike conventional gates, quantum gates are reversible. Some universal classical logic gates such as Toffoli gates exhibit reversibility and can be mapped directly to quantum logic gates. Quantum gates are represented by unitary matrices; in the case of logic gates with two qubits, the unitary matrices are of dimension 4X4. The implementation of a logic gate is probabilistic if there is a certain probability of obtaining the desired result from the logic gate, the value of this probability depending on the configuration of the gate.

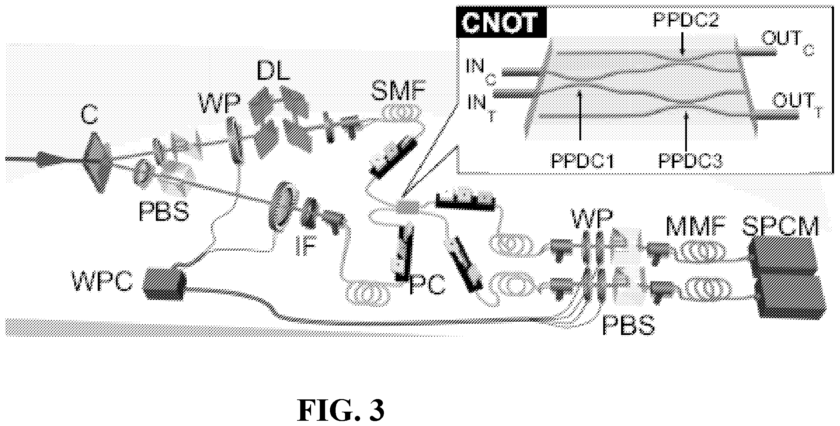

The logic gate and the method proposed for its implementation and use can be, respectively, arbitrary or chosen so as to implement an arbitrary logic gate, in the sense that the gate can be of any desired type of logic gate and operates on at least two qubits. Purely by way of example, a detailed description will be given of the C-NOT logic gate shown in Fig. 3, although it is to be understood that the present invention describes and is applicable to quantum logic gates in general, including, for example, the following logic gates: CZ logic gates and CNOT logic gates, in different configurations and with different probabilities.

More specifically, the gate is a logic gate which includes a beam splitter which exhibits a behaviour dependent on the polarization of the electromagnetic field at the input, propagating the horizontal polarization called "H" or (TE) in a different way from the vertical propagation called "V" or (TM).

Therefore, any device which propagates the two distinct polarizations in a similar way falls outside the scope of the present invention.

The device in question is therefore known as a partially polarizing beam splitter (PPBS), and is an integrated optical device (and not a fibre device) which has at least two input ports and at least two output ports. The ports can be waveguides, for example.

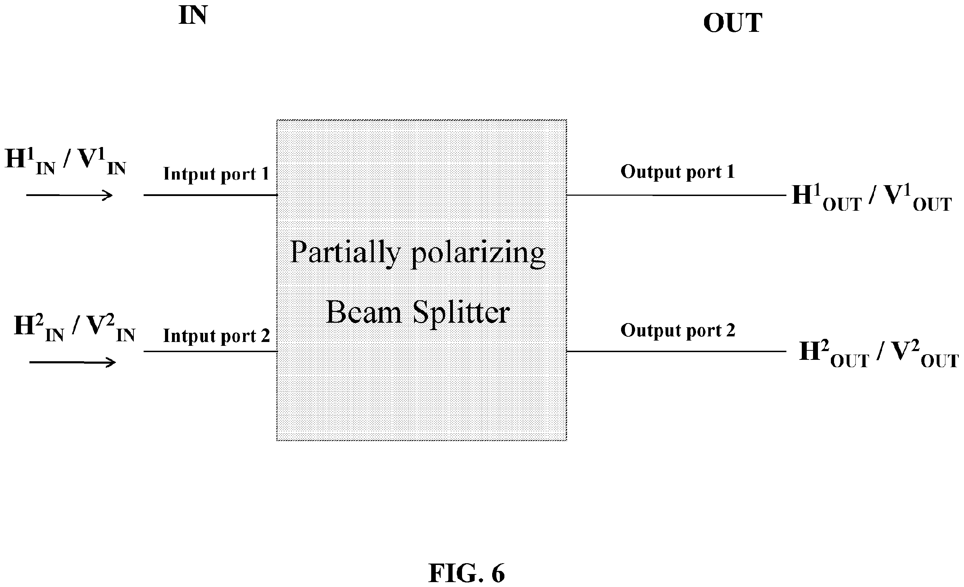

In schematic terms, this PPBS and its operation can be explained with reference to Fig. 6, in which the input ports are called, respectively, input port 1 and input port 2, while the output ports are called output port 1 and output port 2.

In normal use of the logic gate, as detailed below, a combination of the two possible polarization states H and V can be sent, for example, as the input to the input port 1, and similarly to the input port 2.

At the exit from the PPBS, at each of the two ports output 1) and output 2), there will be a combination of the horizontal and vertical polarizations in certain predefined ratios called "splitting ratios" which are normally expressed as percentages.

In particular, again with reference to Fig. 6, the term "splitting ratio" for the horizontal polarization H sent to input port 1 (or to input port 2, which is similar) (SR-H) is defined as the percentage of horizontal polarization H at the exit from output port 1, where the remaining portion of the horizontal polarization will emerge at output port 2.

Similarly, for the vertical polarization, the splitting ratio (SR-V) is defined as the percentage of the vertical polarization V sent to input port 1 (or to input port 2, which is similar) at the exit from output port 1), while the remaining portion of the vertical polarization V will emerge at output port 2.

Evidently, the roles of H and V are interchangeable, and it is important to emphasize that the case in which there is a total splitting of one or both of the polarizations, for example all the H polarization sent as the input (to 1 or 2) exits from a single port, for example SR-H = 100%, is included within the scope of the present invention. In particular, if a polarization has an SR of 100% while the other has an SR of 0%, the PPBS is called a PBS (polarizing beam splitter). Alternatively, for example, in a partial PBS (PPBS) it is possible that SR-H=100%, but SR-V=33%.

However, the preceding description of the PPBS is independent of the physical implementation of the splitter, provided that it is made in integrated optics; in other words, the PPBS can be implemented as a directional coupler, a Mach-Zehnder interferometer or other type of interferometer, provided that its behaviour is dependent on the polarization, and therefore, in the final analysis, it is composed of waveguides each having a birefringence other than zero. By way of a preferred example of embodiment, a detailed description will be given of the embodiment of the PPBS based on a directional coupler which includes two waveguides made in integrated optics, called the first and second waveguides. These are placed closely together, in such a way that power is transferred from one guide to the other by evanescent field, over a length called the coupling length, defined more fully below. The two waveguides can be identical to or different from each other.

A qubit - in other words, a photon - defined generically by formula (1) above is sent as the input to each of these first and second waveguides. Clearly, the logic gate can include further gates (waveguides) at the input and also at the output, and can therefore "handle" more than two qubits.

The qubits sent as the input can be entangled (in other words, "correlated in a quantum way", or non-separable, in other words described by a non-factorizable wave function), or can be states which are separable from each other.

The formalism and nomenclature used are as follows: we will consider two non-interacting systems A and B associated with Hilbert spaces $H_A$ and $H_B$ respectively. The Hilbert space of the composite system, according to the postulates of quantum mechanics, is the tensor product $H_A \otimes H_B$. If the qubit of the first system is indicated as the state $|\psi\rangle_A$ and the second as $|\phi\rangle_B$, the state of the composite system is $|\psi\rangle_A |\phi\rangle_B$.

States of this type are called separable states.

Given two bases $|i\rangle_A$ and $|i\rangle_B$ associated with the observables $\Omega_A$ and $\Omega_B$, the above pure states can be written thus:

$$\left(\sum_i a_i |i\rangle_A\right)\left(\sum_j b_j |j\rangle_B\right),$$

for a certain choice of complex coefficients $a_i$ and $b_j$. This is not the more general state of $H_A \otimes H_B$, which has the form

$$\sum_{i,j} c_{ij} |i\rangle_A |j\rangle_B .$$

If this state is not separable, it is called an entangled state; in other words, it cannot be rewritten as the tensor product of two kets of the two different spaces, or is described by a non-factorizable wave function.

Single photon states are considered as qubits Additionally, it is known that, in general, the encoding of the information in a qubit can take place by using various different degrees of freedom of a single photon. In the case of the present invention, the polarization of the photons is used as the encoding. The presence of sources of photons in polarization-entangled quantum states makes this encoding attractive for practical applications. For example, the article by P. Kok et al., Rev. Mod. Phys. 49, 125 (2008), describes a source of polarization-correlated quantum states. In this case, therefore, in the notation of equation (1) the states $|0\rangle$ and $|1\rangle$ represent the horizontal and vertical polarization states; in other words, the single photon polarization states, otherwise called vertical and horizontal polarization states, are considered as the base vectors.

The invention therefore uses a partially polarizing beam splitter, which in the preferred example is a directional coupler, in which a first and a second qubit are sent into the first and second waveguide, these qubits being polarization-encoded. Clearly, since interferences must be generated between two single-photon states, the two qubits must arrive at the inputs of the first and second waveguides essentially simultaneously; in this context, an essential simultaneity of arrival times is achieved when the coherence time is much greater than the time delay of the photons.

The two-qubit logic gate can create an entanglement between the two qubits, or conversely make two initially entangled qubits separable.

In particular, the logic gate which includes the partially polarizing beam splitter described above, which is implemented in such a way that its behaviour is dependent on the polarization, using birefringent waveguides. More specifically, the partially polarizing beam splitter exhibits an arbitrarily different power division for the two polarizations, horizontal (H) and vertical (V), as described above. These devices allow quantum logic gates to be reduced on to chips for polarization-encoded qubits, and are therefore essential elements for the construction of a quantum computer.

The implementation of the partially polarizing beam splitter in integrated optics makes it possible to overcome the problems described with reference to the prior art. Clearly, depending on the type of logic gate implemented, it may be necessary to use more than one interconnected beam splitter, the number and position of these depending on the type of operation to be performed on the input qubits.

It should be noted that the implementation of these beam splitters in fibre would not resolve the stated problems, since the problems and difficulties described with reference to bulk systems would persist.

The logic gate therefore comprises at least one PPBS, which, for example, may be formed by a directional coupler as described, or may comprise more than one of these.

A preferred, but not the only, method for manufacturing these devices is that of the direct writing of guides on glass using femtosecond lasers. In this method, femtosecond laser pulses focused by a microscope objective interact with the substrate in a non-linear way, causing a permanent localized increase in the refractive index of the material. The translational movement of the substrate during the irradiation therefore produces a structure of arbitrary geometry in the volume of the material, which acts as an optical waveguide.

However, this beam splitter can also be produced by optical or electronic beam lithography.

A birefringent waveguide is a guide in which the two orthogonal polarizations correspond to distinct, non-degenerate guided modes, with different effective indices. The birefringence of the guided modes can be created by two different factors: a) birefringence of the material (intrinsic or induced in the fabrication process); b) form birefringence, which arises if the cross section of the guide does not meet certain symmetry requirements (in the case of an elliptical cross section, for example). Femtosecond laser writing allows the birefringence of the guide to be controlled by acting on both of the aforesaid factors.

In a beam splitter, the power transfer from one guide to the other can be described by evanescent field coupling of the modes of the two guides in the region in which they are near each other. As the length of this region varies, the transferred power follows a sinusoidal trend, the period of which, called the beat period, depends on the coupling coefficient of the two modes.

The coupling length is preferably within the range from 10 $\mu$m to 2 cm, where the upper limit is determined by the need to produce compact devices and minimize propagation losses.

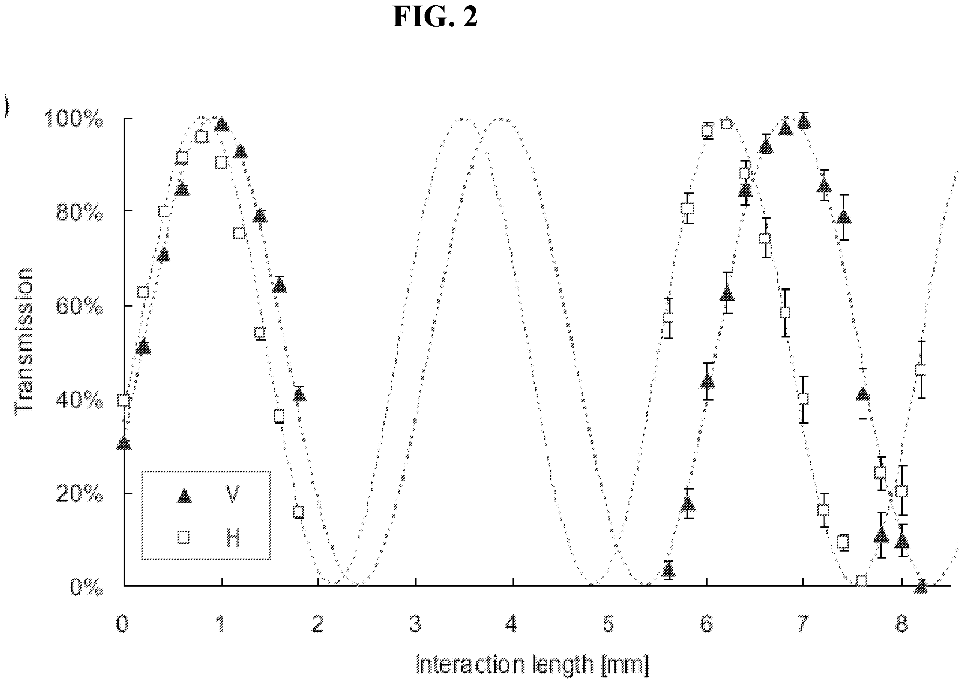

By fabricating a beam splitter with birefringent guides, it is possible to obtain a different coupling coefficient, and therefore a different beat period, for the two polarizations. In particular, when waveguides with moderate birefringent and short interaction lengths are used, the difference in splitting ratio between the two polarizations can be minimal (see the attached Figure 2), enabling devices to be produced which are practically insensitive to polarization, as described in the article by L. Sansoni, F. Sciarrino, G. Vallone, P. Mataloni, A. Crespi, R. Ramponi, and R. Osellame, Phys. Rev. Lett. 105, 200503 (2010). By using the same guides, but with greater wavelengths, comprising different periods, it is possible to unbalance the splitting ratio strongly between the two polarizations; in this way, essential components for quantum optical circuits, such as polarizing beam splitters (PBS) and partially polarizing beam splitters (PPBS) can be produced in integrated form.

The applicants have discovered, in particular, that the optimal operation of a C-NOT quantum logic gate requires the use of at least one PPBS with a splitting ratio preferably within the following ranges:

- Splitting ratio (SR-H): greater than 97%, preferably greater than 99%, and more preferably 100%.
- Splitting ratio (SR-V): from 28% to 38%, or preferably from 32% to 34%.

The logic gate therefore includes a beam splitter which is a partially polarizing beam splitter. However, it is to be understood that polarizing beam splitters are included in the definition of partially polarizing beam splitters as a special case of the latter.

However, in applying the principles of "bulk" quantum optics to integrated optics, and in transferring the architecture of quantum logic gates from bulk to chip, the applicants have had to resolve a number of general problems.

Not all integrated waveguides are suitable for transporting polarization-encoded qubits. Consequently, the selection of an appropriate waveguide has a considerable effect on the performance of integrated quantum logic gates, and in some cases it may even prevent their correct operation.

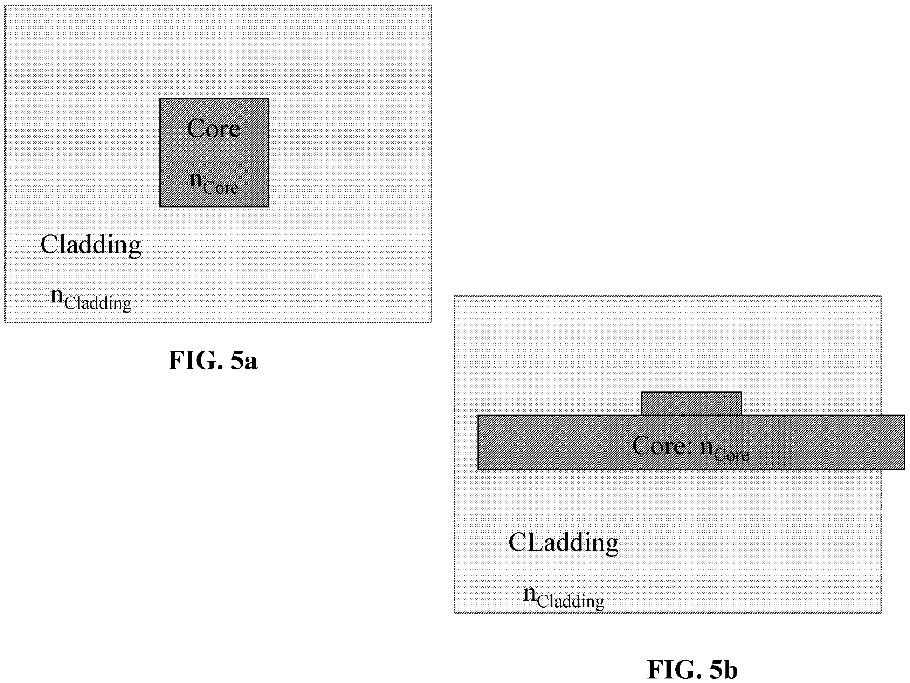

Reference is made below to Figures 5a and 5b which show the typical cross sections of an integrated optical waveguide. Figure 5a shows in detail an example of a buried waveguide having a core and a cladding, which have the refractive indices $n_{Core}$ and $n_{Clad}$ respectively, where $n_{core}$ is always greater than $n_{Clad}$.

The shape of the core can be arbitrary, for example square, rectangular, circular or elliptical.

It is also possible to use what are known as "ridge" or "rib" guides, as shown in Fig. 5b.

The difference between the refractive indices of the core and the cladding can be produced, for example, in the following ways: doping, implantation, diffusion, ion exchange, laser irradiation; or by using different materials for the core and cladding. A parameter of fundamental importance in the characterization of the behaviour of an integrated waveguide is the index contrast. With reference to equations (2a) and (2b) below, the index contrast between the core and the cladding of a waveguide is defined in the scientific literature as:

$$\Delta n = \frac{\left(n_{core}\right)^2 - \left(n_{cladding}\right)^2}{2\left(n_{core}\right)^2}$$

equation (2a)

$$\Delta n = \left(n_{core} - n_{Cladding}\right) / n_{Cladding}$$

equation (2b)

If the index step is very low, the approximate formula of equation (2b) can be used. Regardless of the formula used to calculate $\Delta n$ the index contrast can conveniently be expressed as a percentage $\Delta n(\%)$ and is denoted thus in the following text.

In a waveguide in which both TM and TE modes can be propagated, in a highly birefringent waveguide for example, $\Delta n$ can differ according to the polarization, so that there can be $(\Delta n)_{TE}$ and $(\Delta n)_{TM}$.

Table 1 shows, by way of example, the index contrast $\Delta n(\%)$ for the waveguides most widely used for integrated optical applications in various fields, such as those used in telecommunications, data communications, or high-sensitivity sensor technology. The range of wavelengths over which these guides can be used extends from the visible to the near infrared: $\lambda = (500 - 10000)$ nm.

Concerning the methodology, the results shown in Table 1 were obtained by assuming a square guide as shown in Fig. 5a in which the cladding is made of $SiO_2$ and has a refractive index $n_{CLAD} = 1.446$ @ $\lambda = 1550$ nm. The core is made of the various materials listed and the index contrast $\Delta n(\%)$ was calculated by the formulae of equation (2a) or equation (2b).

Clearly, a person skilled in the art could easily adapt the results in Table 1 to other application wavelengths or to materials, geometries or fabrication methods not covered by Table 1.

Table 1. The core index was measured at $\lambda = 1550$ nm.

| Material of the core | $n_{CORE}$ | $\Delta n(\%)$ |
|---|---|---|
|  |  |  |
| **Femtosecond laser modified SiO$_2$** | 1.451 | 0.3 % |

(continued)

| Material of the core | $n_{CORE}$ | $\triangle n(\%)$ |
|---|---|---|
| SiO$_2$:Ge | 1.45 - 1.48 | (0.1 - 2.8)% |
| SiON | 1.49 - 1.53 | (3.0 - 6.0) % |
| Si$_3$N$_4$ or SiN | 1.8 - 2.4 | (18 - 30) % |
| Semiconductor: Si, Poly-Si, GaAs, SiGe, Ge, etc. | > 3 | > 40% |

Regardless of the application wavelength, the behaviour of an integrated waveguide is generally closely dependent on the index contrast: the greater the index contrast, the higher will be the confinement of the guided mode, with a consequent reduction of the effective area $A_{EFF}$ of the guide (and an increase in the non-linear effects). As the confinement increases, the losses due to curvature also decrease, allowing smaller radii of curvature to be used. In the scientific literature, medium to low index contrast waveguides are generally considered to be those for which $\triangle n(\%)$ is less than 10%. Waveguides for which $\triangle n(\%)$ is greater than 20% are considered to be high, or very high step waveguides.

The possibility of obtaining smaller radii of curvature is important for the purposes of reducing the final dimensions of the chip. On the other hand, an increase in the index contrast can lead to a rise in the losses due to lateral or surface roughness of the guides, in addition to the difficulty of fabrication. Furthermore, a high index contrast is typically associated with a high birefringence of the guide, unless complex compensation methods are used, which would be detrimental to the propagation of polarization-encoded qubits. By balancing these opposing requirements, we can define an optimal range of index contrast $\triangle n(\%)$ for quantum optics applications. This range is equal to (0.1 - 6)%. More preferably, it is (0.1 - 2.8)%, or even more preferably (0.2 - 1)%.

For example, in the case of a waveguide with a semiconductor core buried in a dielectric, i.e. silicon with SiO$_2$ cladding, dimensional checking of the order of (1 - 10) nm is required on the transverse dimensions of the core of the guide: this makes it very difficult to achieve the requisite phase stability in order to use these guides in quantum optics for the effective processing of qubits while preserving coherence. To overcome this problem, the applicants have preferentially included trimming or tuning devices in the device such as the micro-heaters described above, or other mechanisms capable of changing the properties of the material forming the core of the guide, or devices which act on the evanescent field such as structures comprising MEMS diaphragms or electro-optical or charge injection trimming mechanisms.

It is important to emphasize the difference between the absolute value of the effective index of a waveguide $n_{eff}$ and the index contrast $\triangle n$.

It is possible to have exemplary embodiments of waveguides in which the index contrast is relatively low even when the effective index is very high; examples are ridge guides made of semiconductor with cladding also made of semiconductor, as shown in Figure 5b, and LiNbO$_3$ guides of the proton exchange or titanium diffusion type. These guides are included within the scope of the present invention.

For the purposes of the present invention, the applicant has discovered that the important parameters for the selection of a guide for producing a correctly functioning logic gate to operate on polarization-encoded qubits are the index contrast as defined in equation 2a or 2b, and the birefringence of the waveguide.

In designing the waveguides for quantum optical devices in integrated optics, particularly polarizing beam splitters (PBS) or partial polarizing beam splitters (PPBS), the applicants examined the parameters required to achieve the following outcome in the best way:

1. A sufficiently high index step to allow the provision of small radii of curvature and therefore compact devices (of the order of a few centimetres).
2. Optimal birefringence to allow the suitable processing of the polarization qubits.

In addition to the preceding constraints, it is necessary to achieve a high degree of control of the transverse dimensions of the waveguide and of the uniformity of the refractive index in the core and cladding.

In the following text, the portion of waveguide in which the pure propagation of the qubits will be distinguished from the portion which belongs to the interaction region of the PBS or PPBS.

A portion of waveguide in which the pure propagation of a qubit takes place is the part of the guide which serves solely to transport the quantum signal from one region of the chip to the next, while introducing the smallest possible amount of optical loss, where, preferably, loss < 0.5 dB/cm, or more preferably loss < 0.2 dB/cm; the smallest possible distortion, manifested in the form of a constraint on the dispersion, which must be in the range from 200 to

$$-200 \frac{picosecond}{nm*km},$$ more preferably 100 to - 100 $$\frac{picosecond}{nm*km};$$ and the smallest possible decoherence. For example, these pure propagation portions are those between one PPBS and the next, or in the regions of transition towards the coupling region of a given PPBS, where the two qubits interact with each other.

In the pure qubit propagation portions of a waveguide, therefore, the birefringence must be low or even zero, in order to maintain the coherence of the quantum states.

In this case it is preferable to have a birefringence of less than $10^{-4}$, a value which is reported in the literature, for example in Physical Review Letters 105, 200503 (2010), and which constitutes an upper limit above which the correct operation of quantum logic gates is seriously compromised.

On the other hand, in the coupling region of the PBS or PPBS as defined above, it is essential to have non-zero birefringence in order to allow the splitting of the polarizations.

As a general rule, given the geometry of the guide and the separation of the active region of the PBS or PPBS, the dynamic of the change in polarization becomes faster as the birefringence increases.

For the purpose of producing a compact PBS or PPBS, the applicants have discovered that the optimal birefringence lies within the following ranges: ($10^{-6}$ - $6*10^{-5}$), or more preferably ($10^{-5}$ - $5*10^{-5}$).

It is important to note that, even in the interaction region, the birefringence must not be arbitrarily high, as this would compromise the coherence of the qubits.

In view of the above, the applicants have discovered that not all integrated optical waveguides are suitable for use in a quantum logic gate, particularly in a device which has to act in a controlled and repeatable way on polarization states, such as a PBS or PPBS.

For the purposes of the present invention, a waveguide which is suitable for the simultaneous support of the propagation and the polarization processing of qubits, and therefore suitable for use in a PBS or PPBS, must have the following characteristics:

1. $\Delta n(\%)$ preferably in the range (0.1 - 6)%, more preferably in the range (0.1 - 2.8)%, and even more preferably in the range (0.2 - 1)%

2. A birefringence B = $n_{TE}$ - $n_{TM}$ preferably in the range ($10^{-6}$ - $6*10^{-5}$), or more preferably in the range ($10^{-5}$ - $5*10^{-5}$).

A guide with the aforesaid characteristics is suitable both as a pure propagation guide and as an element of the active region of the PBS or PPBS.

By way of example, with reference to Table 1, buried geometry guides (Fig. 5a) identified as suitable for the purposes of the present invention for supporting the propagation and processing of qubits in polarization include guides with cores of $SiO_2$:Ge or SiON, while those with cores of $Si_3N_4$ or SiN or semiconductors such as Si, Poly-Si, GaAs, SiGe, and Ge are unsuitable for quantum processing.

Guides produced by femtosecond laser writing are particularly suitable for use in a quantum logic gate.

This list is not exhaustive, and a person skilled in the art will easily be able to determine whether or not any given waveguide is suitable for quantum propagation, according to the teachings of the present invention.

As an alternative to the above, it is possible to design the integrated optics chip so as to have different guides according to the requisite functionality, by distinguishing pure propagation guides from those for the active region of the PBS or PPBS, although this would increase the complexity of production and the dimensions of the device, since suitable adiabatic (and therefore lengthy) transition regions would have to be provided between the two types of guide.

A further degree of complexity would be represented by a polarization diversity chip in which the polarizations were separated and processed independently. This would make it necessary to duplicate the optical circuits, thereby increasing the costs and dimensions while reducing the manufacturing yield.

The use of suitably designed gratings or resonators to induce birefringence in the interaction region of the PBS or PPBS would also represent a further difficulty and complication of the architecture of the chip.

The applicants have therefore produced a waveguide capable of supporting qubits both in pure propagation and during polarization processing in the active region of the PBS or PPBS.

The applicants have found that, by using a logic gate including the waveguide produced according to the teachings of the present invention, it is possible to obtain the necessary values of the splitting ratio of the PPBS for the correct operation of the quantum logic gate.

The quantum logic gate therefore includes a beam splitter having a guide with a given birefringence within the limits specified above and with an index contrast within the ranges indicated above, so as to provide a partially polarizing beam splitter such that, when two entangled or non-entangled polarization-encoded qubits are sent to the input, it operates correctly and modifies the polarization of the input qubits when required. The beam splitter does not "rotate" the incoming polarization; in other words an incoming H or V polarization remains the same, but the polarizations are "divided" according to the specified splitting ratios at the output ports SR-H, SR-V.

An example of a logic gate is the use of a system of directional couplers implemented in integrated optics as a C-NOT ("Controlled NOT") gate which acts on the two input qubits. The logic gate is called "controlled" because the gate acts on the two qubits, one of which is used as the control for some operations, while the other is called the target qubit. For example, the CNOT gate executes the NOT operation on the second qubit only when the first qubit is in the state $|1\rangle$; otherwise it does not modify the qubit. It can be represented by the following matrix:

$$\text{CNOT} = \begin{bmatrix} 1 & 0 & 0 & 0 \\ 0 & 1 & 0 & 0 \\ 0 & 0 & 0 & 1 \\ 0 & 0 & 1 & 0 \end{bmatrix}.$$

Therefore the CNOT gate modifies the target qubit according to the following truth table:

| Before | | After | |
|---|---|---|---|
| **Control** | **Target** | **Control** | **Target** |
| 0 | 0 | 0 | 0 |
| 0 | 1 | 0 | 1 |
| 1 | 0 | 1 | 1 |
| 1 | 1 | 1 | 0 |

For a demonstration of this table, if we return to equation (1) above we find that, using a notation in the following vector base:

$$\left\{ |0\rangle = \begin{bmatrix} 1 \\ 0 \end{bmatrix}, |1\rangle = \begin{bmatrix} 0 \\ 1 \end{bmatrix} \right\}$$

and therefore equation (1) can be rewritten as:

$$|\psi\rangle = a|0\rangle + b|1\rangle = \begin{bmatrix} a \\ b \end{bmatrix}.$$

The following abbreviated notation will also be used:

$$|\alpha\rangle \otimes |\beta\rangle = |\alpha\rangle|\beta\rangle = |\alpha, \beta\rangle;$$

if the control qubit is zero, then on the basis of the above statements we must prove that CNOT $|0, \psi\rangle = |0, \psi\rangle$ regardless of the nature of the target qubit $\psi$. In vector notation, we can write:

$$|0, \psi\rangle = a|0\rangle|0\rangle + b|0\rangle|1\rangle = \begin{bmatrix} a \\ b \\ 0 \\ 0 \end{bmatrix}$$

and therefore, by applying the CNOT matrix:

$$\text{CNOT} \, |0, \psi\rangle = \begin{bmatrix} 1 & 0 & 0 & 0 \\ 0 & 1 & 0 & 0 \\ 0 & 0 & 0 & 1 \\ 0 & 0 & 1 & 0 \end{bmatrix} \begin{bmatrix} a \\ b \\ 0 \\ 0 \end{bmatrix} = \begin{bmatrix} a \\ b \\ 0 \\ 0 \end{bmatrix} = |0, \psi\rangle$$

.

In the same way it can be demonstrated that the CNOT quantum gate modifies the target qubit when the control qubit is equal to 1, in other words that the CNOT gate operates on CNOT $|1,\psi\rangle$.

In this case,

$$|1, \psi\rangle = \begin{bmatrix} 0 \\ 0 \\ a \\ b \end{bmatrix}$$

and therefore

$$\text{CNOT} \, |1, \psi\rangle = \begin{bmatrix} 1 & 0 & 0 & 0 \\ 0 & 1 & 0 & 0 \\ 0 & 0 & 0 & 1 \\ 0 & 0 & 1 & 0 \end{bmatrix} \begin{bmatrix} 0 \\ 0 \\ a \\ b \end{bmatrix} = a \begin{bmatrix} 0 \\ 0 \\ 0 \\ 1 \end{bmatrix} + b \begin{bmatrix} 0 \\ 0 \\ 1 \\ 0 \end{bmatrix}$$

In other words, CNOT $|1,\psi\rangle = a|1,1\rangle + b|1,0\rangle = |1\rangle(a|1\rangle + b|0\rangle)$; in other words the control qubit is the same while the target qubit has been "flipped".

This logic gate can generate entanglement and can also make the states separable. If we assign the following computational bases (see equation (1) again) to the control qubit C and the target qubit T:

$$\left\{ |0\rangle_C, |1\rangle_C \right\} \equiv \left\{ |H\rangle, |V\rangle \right\}$$

$$\left\{ |0\rangle_T, |1\rangle_T \right\} \equiv \left\{ |D\rangle = \frac{|H\rangle + |V\rangle}{\sqrt{2}}, |A\rangle = \frac{|H\rangle - |V\rangle}{\sqrt{2}} \right\}$$

we obtain the entangled states from the separable states, and conversely:

$$|0\rangle_C |0\rangle_T \leftrightarrow \frac{|HH\rangle + |VV\rangle}{\sqrt{2}} = |\phi^+\rangle$$

$$|0\rangle_C |1\rangle_T \leftrightarrow \frac{|HV\rangle + |VH\rangle}{\sqrt{2}} = |\psi^+\rangle$$

$$|1\rangle_C |0\rangle_T \leftrightarrow \frac{|HH\rangle - |VV\rangle}{\sqrt{2}} = |\phi^-\rangle$$

$$|1\rangle_C |1\rangle_T \leftrightarrow \frac{|HV\rangle - |VH\rangle}{\sqrt{2}} = |\psi^-\rangle$$

equation (3)

where the separable states are converted (and vice versa) into what are known as Bell states, also called maximally entangled states.

It should be noted that quantum logic gates can be probabilistic; in other words, the probability of success of the logic gate operation is less than 1.

Brief description of the drawings

Further advantages will be made clearer by a description of preferred examples with reference to the attached drawings, in which:

- Figure 1 shows a diagram of a directional coupler including two waveguides according to the invention;
- Figure 2 shows a schematic graph of the transmission of the H and V polarizations (indicated by rectangles and triangles respectively) of directional couplers with different interaction lengths, based on weakly birefringent waveguides;
- Figure 3 shows the experimental apparatus used in the method and the architecture of a quantum CNOT gate;
- Figure 4 shows 4 histograms which describe the "truth table" and the generation of the entanglement;
- Figure 5a shows a schematic cross section of a buried waveguide in integrated optics used in the logic gate The core and the cladding of the guide are shown, these parts having, respectively, a refractive index $n_{Core}$ and $n_{Clad}$, where $n_{core}$ is always greater than $n_{Clad}$;
- Figure 5b shows a schematic cross section of a waveguide of the ridge type implemented in integrated optics. The core and the cladding of the guide are shown, these parts having, respectively, a refractive index $n_{Core}$ and $n_{Clad}$, where $n_{core}$ is always greater than $n_{Clad}$;
- Figure 6 shows a schematic view of a partially polarizing beam splitter required to produce a quantum logic gate according to the present invention.

Description of the preferred exemplary embodiment

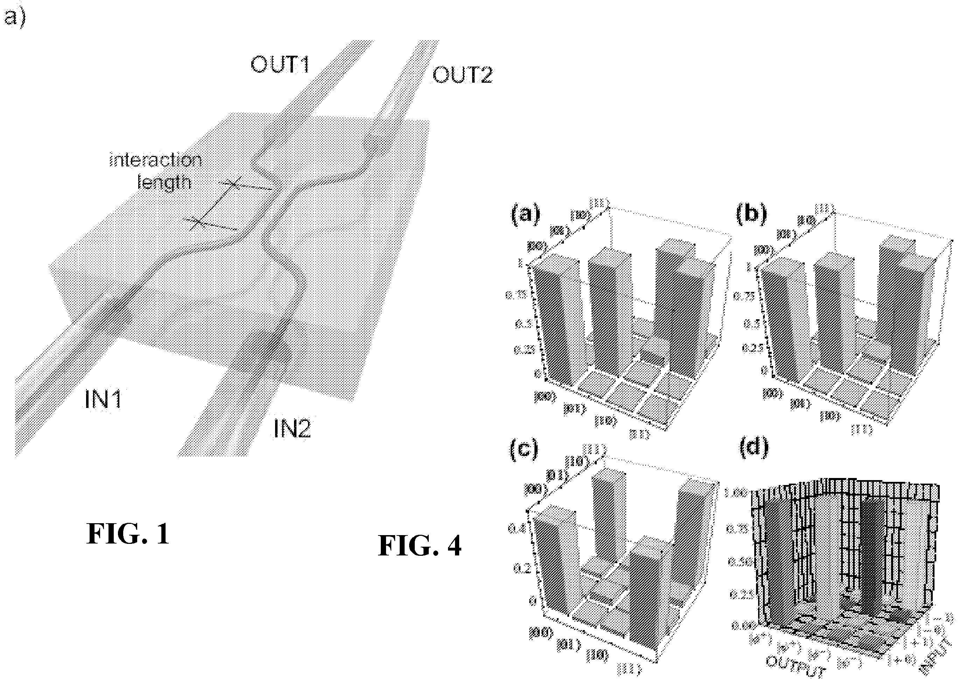

Figure 1 shows the use of an integrated directional coupler comprising a first and a second waveguide.

As in the case of bulk systems, we can define a transmittivity and reflectivity for this coupler, the latter quantity being defined as follows, again with reference to the terminology used in Figure 1, where P is the optical power:

$$R = \frac{P_{OUT1}}{P_{OUT1} + P_{OUT2}}$$

$$T = 1 - R = \frac{P_{OUT2}}{P_{OUT1} + P_{OUT2}}$$

This is true when the light is sent to the input waveguide IN1; if it is sent to the input IN2, the indices must be reversed. The power transfer from one waveguide to the other follows a sinusoidal distribution which depends on the coupling length of the directional coupler, and the period of oscillation depends on the coupling coefficient of the two guided modes, in accordance with coupled mode theory.

If birefringence is present in a waveguide, the coupling coefficient may be different for the two polarizations, as shown in the graph in Figure 2. This drawing shows the different variations of the V and H modes (vertical and horizontal polarization) for different coupling lengths of the coupler.

The present coupler has a coupling length which was appropriately selected to obtain a partially polarizing beam splitter which provides highly precise splitting of the two polarizations.

The method used to produce this device is femtosecond laser writing.

Femtosecond laser writing is a recently introduced method for the direct fabrication of photon wave guides in transparent material, as described in R.R. Gatass and E. Mazur, Nat. Photonics 2, 219 (2008). The high peak intensity of the femtosecond pulses is concentrated in the substrate by a microscope objective, so as to induce non-linear material absorption phenomena of the material based on multiple photon ionization. These processes result in plasma formation and energy absorption in a closely confined region around the focus of the laser, causing a permanent localized modification of the material. By suitably adjusting the irradiation parameters, it is possible to achieve a progressive increase in the refractive index. Structures capable of guiding light can easily be produced by moving the glass substrate relative to the laser beam along the desired path. Different concomitant mechanisms, such as structural modifications, the formation of colour centres, diffusion and thermal accumulation, are responsible for the increase in refractive index at microscopic level. However, their relative contribution depends closely on the specific material and the fabrication parameters, such as the wavelength, the duration and energy of the laser pulses, the repetition frequency, the speed of translation of the specimen and the focusing conditions.

*Example*

The waveguides were formed in a borosilicate glass substrate (trade name: Corning EAGLE2000), using a FemtoREGEN commercial femtosecond laser which generates 400 fs pulses at 960 kHz. For the waveguide, pulses with an energy of 240 nJ were focused at 170 $\mu$m under the glass surface, using a 0.6 NA microscope objective, while the workpiece was translated at a constant speed of 20 mm/s. The guided mode at 806 nm was slightly elliptical, measuring 8 $\mu$m X 9 $\mu$m. The propagation losses were 0.8 dB/cm and the single mode fibre coupling losses were approximately 1.3 dB per facet. The birefringence of these waveguides is approximately $B = 7 \times 10^{-5}$. For the curved portions of the waveguide in the directional coupler, a radius of curvature of 30 mm was used, giving a global loss for the whole device of less than 1 dB of further curvature losses.

In order to calibrate the fabrication parameters, a plurality of directional couplers with different coupling lengths from 0 to 2 mm and from 5.6 to 8.2 mm was produced (see again the experimental data in Figure 2). The distance between the waveguides in the coupling region was held constant at 7 $\mu$m. It was found that a device with $T_H = 0$ and $T_V = 2/3$ Si was produced for a coupling wavelength $L_1 \approx 7.4$ mm, while the values of $T_H = 1/3$ e $T_V = 1$ were obtained with a wavelength $L_2 \approx 7$ mm.

A CNOT gate shown in Figure 3 was produced by using this coupler. The CNOT gate has a unitary transformation action as described above, acting on any superposition of two qubit quantum states. Equation (2) shows the action of the resulting CNOT gate on a number of input and output states.

The CNOT gate uses three directional couplers configured as partially polarizing beam splitters as described above, having suitable transmittivity for the polarization. The interaction between two photons takes place in the first coupler shown in the insert of Figure 3 as PPDC1, in which a Hong-Ou-Mandel effect takes place, while the other two couplers provide compensation. In particular, as in the aforesaid example, PPDC1 has a coupling wavelength $L_1 \approx 7.4$ mm, while PPDC2 and PPDC3 have $L_2 \approx 7$ mm.

As shown in Figure 3, the resulting integrated CNOT gate therefore acts as follows: in the first partial polarizer PPDC1, which has $T_H = 0$ and $T_V = 2/3$, where the target and control qubits interfere, while the following two couplers PPDC2 and PPDC3 with $T_H = 1/3$ and $T_V = 1$ balance the horizontal and vertical polarization contributions. The CNOT operation is carried out with a probability of 1/9. Clearly, these are the theoretical transmittivities; the performance of the apparatus was tested experimentally.

*Example*

The apparatus of Figure 3 can be divided into three sections. The first of these is a source of pairs of photons at a wavelength A = 808 nm, using "spontaneous parametric down conversion" in a $\beta$-barium borate crystal (C) with dimensions of 1.5 mm cut by non-linear "phase-matching". The crystal was pumped with a laser diode having a power P = 50 mW. The polarization states of the photons were prepared by using polarizing beam splitters (PBSs) and waveplates (WPs). A delay line (DL) was inserted to control the temporal superposition of the photons, which were then coupled to single mode fibres (SMFs) and injected into the integrated CNOT logic gate. Interference filters (IF) determine the bandwidth of the photons: $\Delta\lambda$ = 6 $nm$.

The logic gate is shown in detail in the insert and is described above.

The apparatus for analyzing the polarization of the qubits emerging from the CNOT gate is standard (WP+PBS). The photons were then sent to a single photon counting module (SPCM) through multimode fibres (MMFs) and the counts in coincidence between the two channels were measured. Polarization controllers (PC)were used before and after the CNOT gate to compensate for polarization rotation due to the fibres. An electronic controller (WPC) moved the motorized waveplates to make the measurement automatic.

The PPDC1 and PPDC2,3 devices produced in the experiment were characterized by a laser source and have the following experimental parameters:

$$\overline{T}_H^1 < 1\%, \overline{T}_V^1 = (64 \pm 1)\%, \overline{T}_H^2 = (43 \pm 1)\%, \overline{T}_V^2 = (98 \pm 1)\%, \overline{T}_H^3 = (27 \pm 1)\%, \overline{T}_V^3 = (93 \pm 1)\%$$

.

The truth table for the device shown in Figure 3 was drawn up as an initial experiment. The temporal superposition of the photons in PPDC1 was found by adjusting the delay line DL. The four base states shown on the left in equations (2) were then injected into the apparatus of Figure 3, and the probability of finding them was measured for each of them at the output.

The experimental truth table is shown in Figure 4(a). The fidelity was calculated as $F$ = 0.940 $\pm$ 0.004 . Partial distinguishability of the photons, measured by Hong-Ou-Mandel two-photon interference, slightly reduced the fidelity of the logic gate. By correcting the truth table to remove these imperfections, the results of Figure 4(b) were obtained, in which the fidelity of the system is described by $F_{dev}$ = 0.975 $\pm$ 0.008. This fidelity could then be compared with the expected fidelity, calculated with allowance for the measured transmittivity of the different PPDCs, and equal to

$$\overline{F} = 0.975 \pm 0.007$$
.

As stated above, the CNOT logic gate can also be used as a gate for generating entanglement of the qubits. Accordingly, the states on the left of equations (2) were sent to the CNOT gate and their conversion to the Bell states (the states on the right of equations (2)) was verified experimentally. Figures 4(c) and 4(d) show the reconstructed density matrices and the probability of generating the different Bell states.

## Claims

1. Use of at least one partially polarizing beam splitter (PPBS), the beam splitter comprising a first waveguide and a second waveguide which are constructed in integrated optics, and a coupling region, the first and second waveguides having a refractive index contrast of between 0.1% and 6% and a birefringence of between $10^{-6}$ and $6*10^{-5}$ as a quantum logic gate for qubits, for receiving as inputs (IN1, IN2) at least two polarization-encoded qubits so that interference is generated.

2. Use of at least one PPBS according to Claim 1, wherein the logic gate is a CNOT logic gate and the splitting ratio of the partially polarizing beam splitter (PPBS) is greater than 97%, for one polarization.

3. Use of at least one PPBS according to Claim 1, wherein the logic gate is a CNOT logic gate and the splitting ratio of the partially polarizing beam splitter (PPBS) is between 28% and 38% for one polarization.

4. Use of at least one PPBS according to one or more of the preceding claims, wherein at least one of the first and second waveguides comprises means for trimming the refractive index of the waveguide.

5. Use of at least one PPBS according to one or more of the preceding claims, wherein at least one of the first and second waveguides has a dispersion of between 200 and -200.

6. Use of at least one PPBS according to one or more of the preceding claims, wherein the two qubits are entangled.

7. Use of at least one PPBS according to one or more of the preceding claims, wherein the length of the coupling region in the partial beam splitter is between 10 $\mu$m and 2 cm.

8. Use of at least one PPBS according to one or more of the preceding claims, wherein the first and/or the second waveguide is produced by femtosecond laser writing.

9. A system for the entanglement or for the disentanglement of two qubits, comprising:

- a source of photons, each photon forming a polarization-encoded qubit;
- means of propagating the polarization-encoded qubits;
- a quantum logic gate including a partially polarizing beam splitter (PPBS), the beam splitter comprising a first waveguide and a second waveguide which are constructed in integrated optics, and a coupling region, the first and second waveguides having a refractive index contrast of between 0.1% and 6% and a birefringence of between $10^{-6}$ and $6*10^{-5}$;
- means for detecting a single photon.

**Patentansprüche**

1. Verwendung von wenigstens einem teilweise polarisierenden Strahlteiler (PPBS), wobei der Strahlteiler einen ersten Wellenleiter und einen zweiten Wellenleiter umfasst, die in integrierter Optik ausgebildet sind, und einen Verbindungsbereich, wobei der erste und der zweite Wellenleiter einen Brechungsindexkontrast zwischen 0,1 % und 6 % und eine Doppelbrechung zwischen $10^{-6}$ und $6*10^{-5}$ als Quanten-Logik-Gate für Qubits aufweisen, um als Eingaben (IN1, IN2) mindestens zwei polarisationsverschlüsselte Qubits zu empfangen, so dass Interferenz erzeugt wird.

2. Verwendung von wenigstens einem PPBS nach Anspruch 1, wobei das Logik-Gate ein CNOT-Logik-Gate ist und das Teilungsverhältnis des teilweise polarisierenden Strahlteilers (PPBS) größer als 97 % für eine Polarisation ist.

3. Verwendung von wenigstens einem PPBS nach Anspruch 1, wobei das Logik-Gate ein CNOT-Logik-Gate ist und das Teilungsverhältnis des teilweise polarisierenden Strahlteilers (PPBS) zwischen 28 % und 38 % für eine Polarisation liegt.

4. Verwendung von wenigstens einem PPBS nach einem oder mehreren der vorstehenden Ansprüche, wobei wenigstens einer der ersten und zweiten Wellenleiter Mittel zum Trimmen des Brechungsindexes des Wellenleiters umfasst.

5. Verwendung von wenigstens einem PPBS nach einem oder mehreren der vorstehenden Ansprüche, wobei wenigstens einer der ersten und zweiten Wellenleiter eine Dispersion zwischen 200 und -200 aufweist.

6. Verwendung von wenigstens einem PPBS nach einem oder mehreren der vorstehenden Ansprüche, wobei die zwei Qubits verschränkt sind.

7. Verwendung von wenigstens einem PPBS nach einem oder mehreren der vorstehenden Ansprüche, wobei die Länge des Verbindungsbereichs in dem Teilstrahlenteiler zwischen 10 $\mu$m und 2 cm liegt.

8. Verwendung von wenigstens einem PPBS nach einem oder mehreren der vorstehenden Ansprüche, wobei der erste und/oder der zweite Wellenleiter durch Femtosekunden-Laserschreiben erzeugt wird.

9. System zum Verschränken oder Entschränken von zwei Qubits, umfassend:

- eine Photonenquelle, wobei jedes Photon ein polarisationsverschlüsseltes Qubit bildet;
- Mittel zur Ausbreitung der polarisationsverschlüsselten Qubits;
- ein Quanten-Logik-Gate, aufweisend einen teilweise polarisierenden Strahlteiler (PPBS), wobei der Strahteiler einen ersten Wellenleiter und einen zweiten Wellenleiter umfasst, die in integrierter Optik ausgebildet sind, und einen Verbindungsbereich, wobei die erste und die zweite Wellenleiter einen Brechungsindexkontrast zwischen 0,1 % und 6 % und eine Doppelbrechung zwischen $10^{-6}$ und $6*10^{-5}$ aufweisen;
- Mittel zum Erfassen eines einzelnen Photons.

**Revendications**

1. Utilisation d'au moins un séparateur de faisceau partiellement polarisant (PPBS), le séparateur de faisceau comprenant un premier guide d'ondes et un second guide d'ondes qui sont construits dans une optique intégrée, et une région de couplage, les premier et second guides d'ondes ayant un contraste d'indice de réfraction compris entre 0,1 % et 6 % et une biréfringence comprise entre 10-6 et 6*10$^{-5}$ en tant que porte logique quantique pour des qubits, pour recevoir comme entrées (IN1, IN2) au moins deux qubits codés par polarisation de telle sorte qu'une interférence est générée.

2.  Utilisation d'au moins un PPBS selon la revendication 1, dans lequel la porte logique est une porte logique NON commandée (CNOT) et le taux de séparation du séparateur de faisceau partiellement polarisant (PPBS) est supérieur à 97 %, pour une polarisation.

3.  Utilisation d'au moins un PPBS selon la revendication 1, dans lequel la porte logique est une porte logique CNOT et le taux de séparation du séparateur de faisceau partiellement polarisant (PPBS) est compris entre 28 % et 38 %, pour une polarisation.

4.  Utilisation d'au moins un PPBS selon l'une ou plusieurs des revendications précédentes, dans lequel au moins l'un des premier et second guides d'ondes comprend des moyens d'ajustement de l'indice de réfraction du guide d'ondes.

5.  Utilisation d'au moins un PPBS selon l'une ou plusieurs des revendications précédentes, dans lequel au moins l'un des premier et second guides d'ondes a une dispersion comprise entre 200 et -200.

6.  Utilisation d'au moins un PPBS selon l'une ou plusieurs des revendications précédentes, dans lequel les deux qubits sont intriqués.

7.  Utilisation d'au moins un PPBS selon l'une ou plusieurs des revendications précédentes, dans lequel la longueur de la région de couplage dans le séparateur de faisceau partiel est comprise entre 10 $\mu$m et 2 cm.

8.  Utilisation d'au moins un PPBS selon l'une ou plusieurs des revendications précédentes, dans lequel le premier et/ou le second guide d'ondes est fabriqué par écriture au laser femtoseconde.

9.  Système pour l'intrication ou pour la désintrication de deux qubits, comprenant :

    - une source de photons, chaque photon formant un qubit codé par polarisation ;
    - des moyens de propagation des qubits codés par polarisation ;
    - une porte logique quantique comprenant un séparateur de faisceau partiellement polarisant (PPBS), le séparateur de faisceau comprenant un premier guide d'ondes et un second guide d'ondes qui sont construits dans une optique intégrée, et une région de couplage, les premier et second guides d'ondes ayant un contraste d'indice de réfraction compris entre 0,1 % et 6 % et une biréfringence comprise entre 10-6 et 6*10$^{-5}$ ;
    - des moyens de détection d'un photon unique.

FIG. 1

FIG. 4

FIG. 2

**FIG. 3**

EP 2 705 472 B1

Core

$n_{Core}$

Cladding

$n_{Cladding}$

**FIG. 5a**

Core: $n_{Core}$

CLadding

$n_{Cladding}$

**FIG. 5b**

IN

OUT

$H^1_{IN} / V^1_{IN}$

Intput port 1

Partially polarizing
Beam Splitter

Output port 1

$H^1_{OUT} / V^1_{OUT}$

$H^2_{IN} / V^2_{IN}$

Intput port 2

Output port 2

$H^2_{OUT} / V^2_{OUT}$

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **N.K. LANGFORD.** Demonstration of a simple entangling optical gate and its use in Bell-state analysis. *Physical Review Letter no. 95,* 2005, 210504
- **R. OKAMOTO.** Demonstration of an optical quantum Controlled-NOT gate without path interference. *Physical Review Letter no. 95,* 2005, 210506
- **A. POLITI et al.** *Science,* 2008, vol. 320, 646
- **A. POLITI ; J. C. F. MATTHEWS ; J. L. O'BRIEN.** *Science,* 2009, vol. 325, 1221
- **J. MATTHEWS et al.** *Nat. Photon.,* 2009, vol. 3, 346
- **LINDA SANSONI.** Polarization entangled state measurement on a chip. *Physical Review Letters,* 2010, vol. 105, 200503
- **S. SALEMIAN et al.** Design and implementation of polarization filter for quantum states discriminator in optical quantum communication. *Optik,* 2010
- **P. KOK et al.** *Rev. Mod. Phys.,* 2008, vol. 49, 125
- **L. SANSONI ; F. SCIARRINO ; G. VALLONE ; P. MATALONI ; A. CRESPI ; R. RAMPONI ; R. OSELLAME.** *Phys. Rev. Lett.,* 2010, vol. 105, 200503
- *Physical Review Letters,* 2010, vol. 105, 200503
- **R.R. GATASS ; E. MAZUR.** *Nat. Photonics,* 2008, vol. 2, 219